# FASCICULE DE BREVET EUROPEEN

(11) **EP 3 850 459 B1**
(45) Date de publication et mention de la délivrance du brevet: **12.02.2025**
(21) Numéro de dépôt: 19794178.4
(22) Date de dépôt: 13.09.2019
(51) Int. Cl.: G05G 5/03, G05G 9/047, B64C 13/04

(54) **DISPOSITIF D'APPLICATION D'EFFORT POUR UN MINI-MANCHE ACTIF ET PROCÉDÉ DE CONTRÔLE EN SECOURS MÉCANIQUE**
KRAFTANWENDUNGSVORRICHTUNG FÜR EINEN AKTIVEN MINISTICK UND STEUERUNGSVERFAHREN FÜR MECHANISCHE SICHERUNG
FORCE APPLICATION DEVICE FOR AN ACTIVE MINI-STICK AND MECHANICAL BACKUP CONTROL METHOD

(30) Priorité: 13.09.2018 FR 1858234
(43) Date de publication de la demande: 21.07.2021
(73) Titulaire: SAFRAN ELECTRONICS & DEFENSE, 92100 Boulogne Billancourt (FR)
(72) Inventeur: LAWNICZAK, Rémi-Louis, 92100 BOULOGNE BILLANCOURT (FR); COPPEE, Pascal, 92100 BOULOGNE BILLANCOURT (FR); BARO, Nicolas, 92100 BOULOGNE BILLANCOURT (FR); ATTRAZIC, Yannick Ghislain, 92100 BOULOGNE BILLANCOURT (FR)
(74) Mandataire: Regimbeau
(86) Numéro de dépôt international: PCT/FR2019/052142
(87) Numéro de publication internationale: WO 2020/053534

(56) Documents cités:
- EP-B1- 1 698 538
- EP-B1- 2 081 822
- WO-A1-2013/189946
- WO-A1-96/42078
- DE-B3- 102005 060 933
- DE-C1- 4 435 289
- FR-A1- 2 647 922
- FR-A1- 3 056 315
- GB-A- 2 516 008
- JP-A- 2014 174 726
- JP-A- 2017 111 464
- JP-A- 2017 182 148
- US-A1- 2001 052 893
- US-A1- 2016 124 458
- US-A1- 2016 221 672
- US-A1- 2016 221 674
- US-A1- 2016 375 996
- US-A1- 2018 251 208
- ANDRZEJ MILECKI ET AL: "Control of a small robot by haptic joystick with magnetorheological fluid", 31 January 2011 (2011-01-31), XP055423162, Retrieved from the Internet <URL:https://www.researchgate.net/profile/Pawel_Bachman/publication/247158668_Control_of_a_small_robot_by_haptic_joystick_with_magnetorheological_fluid/links/00b4951dbc477244fa000000/Control-of-a-small-robot-by-haptic-joystick-with-magnetorheological-fluid.pdf> [retrieved on 20171109]
- BIN LIU: "Development of 2-DOF haptic devices working with magnetorheological fluids", 5 March 2006 (2006-03-05), Wollongong, Australia, XP055424642, Retrieved from the Internet <URL:http://ro.uow.edu.au/cgi/viewcontent.cgi?filename=0&article=1136&context=theses&type=additional> [retrieved on 20171114]

## Description

### DOMAINE TECHNIQUE DE L'INVENTION

L'invention concerne les dispositifs de pilotage utilisés par le pilote dans un cockpit d'aéronef, notamment un manche actif comprenant un retour d'effort intégré pour assister le pilote.

### ETAT DE LA TECHNIQUE

Un dispositif de pilotage dans un cockpit d'aéronef comprend, de manière habituelle, un manche de pilotage avec notamment un levier monté rotatif selon un axe dit de roulis et un axe dit de tangage, ces deux axes étant orthogonaux l'un à l'autre. On rencontre le plus souvent des dispositifs de type « manche à balai ».

En fonction de la position du levier selon les deux axes, le dispositif de pilotage transmet des commandes de déplacement à des organes de pilotage de l'aéronef.

Sur les modèles les plus récents d'aéronef, la commande des mouvements de l'aéronef est électronique et le dispositif de pilotage intégré dans le cockpit peut être de type « mini-manche ». La position du levier selon les deux axes de roulis et de tangage est mesurée par des capteurs et traduite en commandes de déplacement. Le levier n'est pas directement lié mécaniquement aux parties mobiles de l'aéronef et il n'y a pas de retour mécanique direct sur le levier.

Or, il est souhaitable pour la sécurité du vol que le pilote perçoive un retour mécanique au niveau du levier. Les systèmes de signalisation du cockpit peuvent ne pas être suffisants pour provoquer une réaction suffisamment rapide du pilote face à des événements imprévus au cours du vol. Les sensations de pilotage sont bien meilleures si le mini-manche de pilotage intègre un retour d'effort, aussi appelé « retour haptique ».

Il a été proposé à ce titre d'équiper le mini-manche de systèmes mécaniques passifs, comme des systèmes à ressort, ou de systèmes électromécaniques actifs.

Le document brevet FR 3 011 815 décrit un dispositif de commande de vol d'aéronef comportant un levier de commande monté sur une platine et relié à un moteur d'axe de roulis et un moteur d'axe de tangage par l'intermédiaire d'arbres de transmission. Les deux moteurs sont commandés selon une loi d'effort, de sorte à générer un effort résistif s'opposant à l'effort exercé sur le levier (retour d'effort) lorsqu'un seuil d'effort est dépassé par le pilote.

Un dispositif de retour d'effort à moteur électrique est efficace pour restituer les sensations de pilotage et accroître la sécurité.

Toutefois, en cas de défaillance électrique ou mécanique au niveau d'un desdits moteurs, ou en cas de panne sur la chaîne de traitement des signaux de commande des moteurs, le retour d'effort peut être supprimé.

Dans le domaine de l'aéronautique, les exigences en matière de disponibilité des dispositifs de pilotage sont élevées. Il n'est pas acceptable que le pilote passe brutalement à un mode de pilotage sans retour d'effort en cas de défaillance.

En outre, les systèmes actifs de retour d'effort de l'état de l'art comprennent souvent un nombre important de composants, notamment les moteurs de roulis et de tangage mais aussi des embrayages, des limiteurs de couple, des engrenages... Ces systèmes peuvent s'avérer coûteux, encombrants et difficiles à intégrer dans un cockpit d'aéronef.

Le document EP 2 081 822 B1 décrit une interface haptique d'aéronef comprenant des amortisseurs à piston à commande électrique venant suppléer des moteurs électriques de retour d'effort en cas de besoin, pour exercer un couple résistif s'opposant au pivotement d'un levier. Toutefois, dans l'architecture proposée dans ce document, chaque amortisseur est relié par des bielles au levier, pour transformer un mouvement de translation du piston en couple rotatif. Les moteurs de retour d'effort agissent eux-mêmes sur le levier par l'intermédiaire d'engrenages réalisant une réduction de vitesse.

Les organes de liaison mécanique augmentent l'encombrement et réduisent la durée de vie de l'interface haptique. Le débattement angulaire autorisé pour le levier est faible, ce qui nuit à l'ergonomie du levier. L'architecture proposée dans ce document est complexe car les amortisseurs à piston sont montés en parallèle des moteurs de retour d'effort.

En outre, les particules de fluide magnétorhéologique à l'intérieur de l'amortisseur à piston sont susceptibles de se stratifier au cours des périodes où le piston est inutilisé, ce qui réduit encore la durée de vie des amortisseurs.

Le document US 2001/0052893 A1 décrit une interface haptique de véhicule automobile comportant des freins magnétorhéologiques exerçant un effort résistif variable s'opposant au pivotement d'un levier par l'utilisateur. Chaque frein agit sur le levier via une série d'engrenages comprenant au moins un arbre intermédiaire. Dans la variante illustrée sur les Figures 8a et 8b de ce document, le débattement angulaire autorisé pour le levier est limité et l'utilisation du levier est peu ergonomique. De plus, ce document décrit un asservissement des freins magnétorhéologiques via des capteurs d'effort. La présence d'engrenages intermédiaires nécessite en effet un contrôle du couple exercé par les freins en fonction d'un couple mesuré sur le levier.

Enfin, les freins magnétorhéologiques de ce document sont destinés à assurer à eux seuls le retour haptique. Ces freins sont uniquement utilisés pour résister aux déplacements du levier induits par le pilote, et pas pour générer un mouvement sur le levier.

De plus, l'introduction d'organes mécaniques intermédiaires entre les freins et le levier, tels que des trains d'engrenages ou des bielles, implique une réduction des performances dynamiques du manche dont l'inertie augmente.

FR 3 056 315 A1 divulgue une interface haptique comportant un dispositif magnétorhéologique à cet effet.

### PRESENTATION GENERALE DE L'INVENTION

Il existe ainsi un besoin pour un mini-manche de pilotage intégrant une voie de secours mécanique, pour empêcher que la rotation du levier ne soit complètement libre en cas de défaillance électrique affectant un moteur de retour d'effort.

Le mini-manche recherché ne doit pas pouvoir basculer, en cas de panne, dans un mode où le pilote peut pivoter librement le levier sans ressentir un effort résistif.

Il existe un besoin subsidiaire pour un mini-manche de masse, d'encombrement et de consommation électrique moindres.

De façon générale, la fiabilité, la simplicité mécanique et l'ergonomie des dispositifs de retour d'effort existants pour manche de pilotage peuvent être améliorées. Les systèmes existants n'autorisent pas un débattement angulaire suffisant du manche.

A ce titre, l'invention concerne selon un premier aspect un dispositif d'application d'effort pour un manche de pilotage d'aéronef, ce dispositif étant conforme à la revendication 1.

Le frein rhéologique, associé au dispositif de commande de champ électromagnétique, constitue une voie de secours mécanique apte à prendre le relais du moteur d'effort en cas de défaillance affectant ledit moteur ou sa chaîne de contrôle (par exemple une perte d'alimentation ou une défaillance des calculateurs).

La résistance du matériau rhéologique (par exemple, un fluide électrorhéologique ou magnétorhéologique) au cisaillement est modifiable en fonction du champ électromagnétique qui lui est appliqué. Le dispositif de commande du champ électromagnétique est contrôlable électroniquement pour faire varier des contraintes au sein du frein rhéologique, ces contraintes s'opposant au mouvement induit par le pivotement du levier.

En effet, en fonction du champ électromagnétique appliqué, on peut freiner ou empêcher le mouvement rotatif relatif entre la pièce agencée sur l'arbre moteur et la pièce en regard. Un couple résistif est exercé par le frein sur l'arbre moteur et s'oppose au mouvement de rotation du joint mécanique par l'intermédiaire de l'arbre moteur.

Le dispositif d'application d'effort est dépourvu d'organes de transmission mécanique, par exemple des éléments de renvoi d'angle ou des éléments réalisant une réduction de vitesse, entre le frein rhéologique et l'arbre du moteur de retour d'effort. Des avantages de cette construction sont un encombrement réduit du frein rhéologique, une meilleure transmission du couple résistif sur le levier et une meilleure ergonomie générale du mini-manche intégrant ce dispositif du fait de l'absence de variations de couple parasites.

Dans le cas où le moteur d'effort est un moteur à entraînement direct, ou « direct drive » selon la terminologie anglosaxonne courante, le frein rhéologique peut également agir sur les axes de rotation du levier par entraînement direct.

Un avantage additionnel est l'absence de pièces supplémentaires génératrices de friction entre le frein rhéologique et l'arbre moteur. La durée de vie du frein rhéologique est améliorée et la présence du dispositif d'application d'effort a un impact peu important sur les plages de débattement angulaire du levier.

En outre, on évite une forte stratification des particules du matériau rhéologique au cours des plages d'inactivité du frein rhéologique, car le matériau rhéologique est directement positionné entre les pièces mobiles en rotation l'une par rapport à l'autre.

Selon une variante possible, on peut prévoir un blocage du levier via le frein rhéologique, en cas de panne affectant le moteur d'effort.

Le frein rhéologique peut être en outre configuré pour exercer un retour d'effort selon une loi d'effort et/ou d'amortissement à la place ou en complément du moteur d'effort. Le frein rhéologique participe alors au fonctionnement normal du mini-manche. Il n'est alors pas nécessaire d'agencer dans le mini-manche des moteurs électriques dimensionnés pour exercer à eux seuls les efforts résistifs maximaux prévus sur la gamme d'utilisation du manche. Il est donc possible de réduire la masse et l'encombrement du mini-manche.

Le dispositif d'application d'effort de l'invention peut comporter les caractéristiques suivantes, optionnelles et non limitatives, prises seules ou en l'une quelconque de leurs combinaisons techniquement possibles :
- le matériau rhéologique est un fluide magnétorhéologique comprenant des particules magnétiques en suspension, ou le matériau rhéologique est un fluide électrorhéologique comprenant des particules conductrices en suspension, le dispositif de commande étant commandé pour appliquer un champ magnétique ou électrique variable.
- le matériau rhéologique est une poudre magnétique en dispersion entre les deux pièces en regard.
- le moteur d'effort est un moteur couple.
- le moteur d'effort est un moteur à entraînement direct.
- le frein rhéologique est positionné sur l'arbre moteur à l'opposé du joint mécanique par rapport au moteur d'effort.
- le frein rhéologique est positionné sur l'arbre moteur entre le joint mécanique et le moteur d'effort.
- les deux pièces en regard du frein rhéologique sont situées l'une en face de l'autre selon le troisième axe.
- le dispositif d'application d'effort comprend un capteur de vitesse de rotation de l'arbre moteur, le frein rhéologique étant piloté selon un asservissement en vitesse en fonction d'une vitesse de rotation acquise par ledit capteur.
- les deux pièces en regard du frein rhéologique sont un premier disque s'étendant radialement depuis l'arbre moteur et un deuxième disque faisant face au premier disque, le premier disque et le deuxième disque étant centrés sur le troisième axe.
- les deux pièces en regard du frein rhéologique sont une sphère centrée sur l'arbre moteur et au moins partiellement immergée dans le matériau rhéologique et un socle sphérique.
- le dispositif de commande est commandé pour appliquer un champ électromagnétique augmentant la résistance du matériau rhéologique au cisaillement, en cas de défaillance sur une chaîne de traitement du moteur d'effort.
- le couple de glissement du matériau rhéologique est compris entre 10 N.m et 100 N.m, de préférence entre 10 N.m et 75 N.m.
- le dispositif d'application d'effort comprend en outre un capteur d'effort de roulis configuré pour mesurer un couple de roulis exercé sur le levier, et/ou un capteur d'effort de tangage configuré pour mesurer un couple de tangage exercé sur le levier, pour permettre un pilotage en effort du manche de pilotage.
- le frein rhéologique est configuré pour exercer un couple résistif sur le joint mécanique dont une valeur se limite à 70 N.m, de préférence à 25 N.m, en fonction d'un courant électrique fourni au dispositif de commande.
- le dispositif de commande est commandé selon une loi prédéterminée pour exercer un champ électromagnétique qui est fonction d'une position et/ou d'une vitesse du levier.
- le moteur d'effort est un moteur de roulis, la rotation de l'arbre moteur étant liée à la rotation du joint mécanique autour de l'axe de roulis, le frein rhéologique étant adapté pour exercer un retour d'effort sur l'axe de roulis,
- le dispositif comprend en outre un moteur de tangage comprenant un arbre moteur de tangage s'étendant selon un quatrième axe, la rotation de l'arbre moteur de tangage étant liée à la rotation du joint mécanique autour de l'axe de tangage, et comprend un frein rhéologique supplémentaire adapté pour exercer un retour d'effort sur l'axe de tangage.

L'invention concerne selon un deuxième aspect un manche actif de pilotage d'aéronef, comprenant un dispositif d'application d'effort tel que défini ci-avant associé à un levier apte à tourner autour de l'axe de roulis et de l'axe de tangage, le levier étant agencé sur le joint mécanique.

L'invention concerne également un aéronef comprenant un tel manche de pilotage.

Selon un troisième aspect, l'invention se rapporte à un procédé de contrôle en secours mécanique d'un dispositif d'application d'effort sur un manche de pilotage d'aéronef, le procédé étant mis en oeuvre à l'aide d'un dispositif d'application d'effort tel que défini ci-avant et comprenant les étapes de :
détection d'une défaillance sur une chaîne de traitement d'un moteur d'effort du dispositif d'application d'effort,
génération d'une commande de champ électromagnétique en-deçà d'un couple de glissement d'un matériau rhéologique contenu dans un frein rhéologique du dispositif d'application d'effort, ladite commande étant transmise à un dispositif de commande du dispositif d'application d'effort pour bloquer le levier.
De façon optionnelle et non limitative, ce procédé comprend une étape supplémentaire d'activation d'un mode de pilotage en effort du manche.

Selon un quatrième aspect, l'invention se rapport à un procédé de contrôle en loi d'amortissement d'un dispositif d'application d'effort sur un manche de pilotage d'aéronef, le procédé étant mis en oeuvre à l'aide d'un dispositif d'application d'effort tel que défini ci-avant et comprenant les étapes de :
détection d'une position et/ou d'une vitesse d'un levier en rotation autour d'un axe de roulis ou d'un axe de tangage, le levier étant agencé sur un joint mécanique du dispositif d'application d'effort,
génération d'une commande de champ électromagnétique selon une loi prédéterminée en fonction de la position et/ou de la vitesse détectée, ladite commande étant transmise à un dispositif de commande du dispositif d'application d'effort, de sorte qu'un frein rhéologique du dispositif d'application d'effort exerce un couple résistif s'opposant à un mouvement de rotation du levier en complément d'un moteur d'effort du dispositif d'application d'effort.

### PRESENTATION GENERALE DES FIGURES

Des caractéristiques, buts et avantages de l'invention ressortiront de la description qui suit, qui est purement illustrative et non limitative, accompagnée des dessins annexés parmi lesquels :
La **Figure 1** représente schématiquement une architecture de manche de pilotage selon un mode de réalisation de l'invention ;
La **Figure 2** est une vue en perspective d'un levier et d'un joint mécanique d'un mini- manche ;
La **Figure 3** représente schématiquement un dispositif d'application d'effort pour un manche selon une première variante comprenant un frein rhéologique selon une première variante ;
La **Figure 4** est une vue rapprochée du frein magnétorhéologique de la Figure 3 ;
Les **Figures 5a, 5b et 5c** sont des schémas de principe du fonctionnement d'un fluide magnétorhéologique ;
La **Figure 6** est une courbe représentative d'un couple résistif exercé par un frein magnétorhéologique en fonction du courant électrique ;
La **Figure 7** est une vue d'un frein rhéologique selon une deuxième variante ;
La **Figure 8** est une vue d'un frein rhéologique selon une troisième variante ;
La **Figure 9a** est une vue d'un frein rhéologique selon une troisième variante ;
Les **Figures 9b et 9c** sont des schémas de principe du fonctionnement d'une poudre magnétique dans le frein de la Figure 9a ;
La **Figure 10** représente schématiquement un dispositif d'application d'effort pour un manche selon une deuxième variante ;
La **Figure 11** illustre les étapes d'un procédé de contrôle d'un dispositif d'application d'effort de l'invention, en secours mécanique ;
La **Figure 12** illustre les étapes d'un procédé de contrôle d'un dispositif d'application d'effort de l'invention, en loi d'amortissement.

### DESCRIPTION DETAILLEE DE MODES DE REALISATION

Dans toute la suite, on décrit des exemples de dispositifs d'application d'effort sur un levier d'un mini-manche de pilotage d'aéronef comprenant au moins un « frein rhéologique », c'est-à-dire un frein comportant un volume configuré pour être rempli d'un matériau rhéologique. On entend par « matériau rhéologique » un matériau solide ou liquide dont la résistance au cisaillement est variable en fonction d'un champ électromagnétique qui lui est appliqué, selon une caractéristique (ou rhéogramme) prédéterminée. Par exemple, la viscosité du matériau rhéologique est variable en fonction du champ électromagnétique. Par « champ électromagnétique » on entend un champ qui peut être uniquement électrique, ou bien uniquement magnétique, ou bien comprendre une composante magnétique et une composante électrique.

Par ailleurs, on entend par « loi d'amortissement » d'un frein rhéologique la relation entre la position rotative du levier selon un axe de rotation et l'effort de résistance produit par le frein à l'encontre du déplacement autour dudit axe. On entend par « loi d'effort » du dispositif d'application d'effort pris dans son ensemble (frein(s) rhéologique(s) éventuellement complétés par des moteurs électriques) l'effort, qui peut être résistif ou moteur, restitué en fonction de la position du levier selon l'axe.

Des éléments similaires sur les figures annexées seront désignés par les mêmes références alphanumériques tout au long de la description ci-après.

### Architecture d'ensemble du système de pilotage

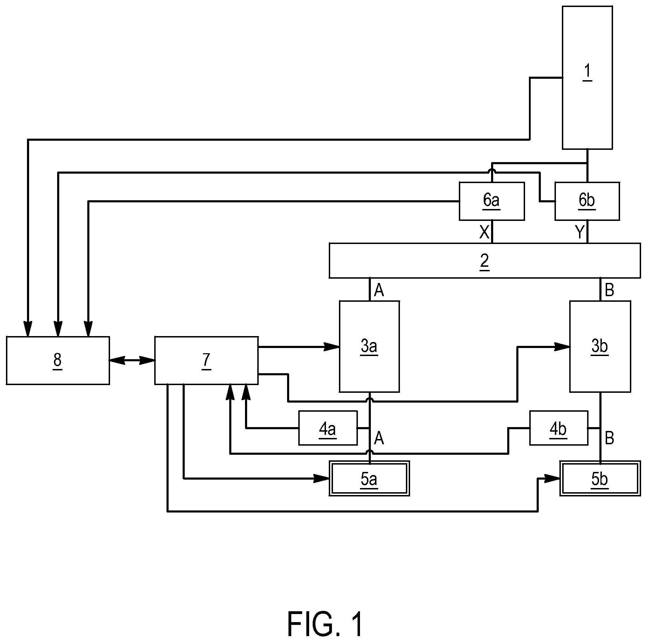

On a représenté en **Figure 1** une architecture fonctionnelle de système de pilotage d'un aéronef selon ses axes de roulis et de tangage comprenant notamment un mini-manche de pilotage. Le mini-manche se trouve typiquement dans le cockpit de l'aéronef.

Sur cette figure, les traits plus épais entre deux unités fonctionnelles correspondent à des liaisons mécaniques. Les autres liaisons fléchées sont des liaisons électroniques par lesquelles peuvent circuler des données.

Le système comprend un levier 1 de commande monté rotatif sur un joint mécanique 2 selon un axe X de roulis et un axe Y de tangage du levier, les deux axes étant orthogonaux. De préférence, le levier 1 est monté sur une platine du joint mécanique 2. Le joint est fixé à un bâti solidaire du plancher du cockpit de l'aéronef.

Des capteurs de position, de préférence un capteur 4a associé à l'axe de roulis et un capteur 4b associé à l'axe de tangage, communiquent des signaux électroniques de position rotative du levier 1 respectivement selon les axes X et Y à un calculateur 7. Le calculateur 7 réalise le pilotage du dispositif d'application d'effort pour réaliser une loi d'effort prédéterminée. Le calculateur 7 comprend une interface électronique pour recevoir lesdits signaux de position. Les capteurs 4a et 4b communiquent également des informations de vitesse de rotation du levier 1 selon ces axes. Les informations de position/vitesse du levier sont traduites en signaux de commande de pilotage de parties mobiles de l'aéronef par une unité 8 de commande de vol, ou FCS pour « Flight Control System ».

Comme il sera décrit ci-après, l'unité 8 de commande est également configurée pour déterminer, en fonction des informations de position/vitesse du levier et éventuellement d'autres informations, des commandes d'application d'effort sur le levier 1. Le calculateur 7 détermine, en fonction des commandes d'application d'effort, des signaux de commande du dispositif d'application d'effort associé au mini-manche.

Dans le présent exemple, le dispositif d'application d'effort comprend un moteur électrique 3a présentant un arbre moteur d'axe A. L'arbre moteur est lié à l'axe X de roulis du levier. Par « lié à l'axe » on entend qu'un mécanisme de liaison existe entre l'arbre moteur d'axe A et le joint 2 qui est mis en mouvement lorsque le levier pivote selon l'axe X.

De préférence, le moteur électrique 3a est un moteur couple ou « torque motor » en anglais. Il s'agit d'un moteur capable de transmettre un couple rotatif important sur l'arbre moteur, même en cas de blocage du rotor. Typiquement, le moteur couple utilisé est un moteur à faible vitesse de rotation et à fort couple rotatif.

L'usage de ce type de moteur est avantageux car l'objectif principal de ce moteur est de transmettre un couple résistif variable sur le levier par l'intermédiaire du joint, et non pas de déplacer le levier.

De préférence, le moteur 3a est un moteur à entraînement direct ou « direct drive » en anglais. On se passe ainsi d'un train d'engrenages de réduction ; il n'y a pas de réduction de vitesse entre l'arbre moteur et la platine du joint mécanique. De plus, le moteur agit directement sur la platine, sans renvoi d'angle.

De plus, l'utilisation de moteurs de retour d'effort permet de générer un mouvement sur le levier. Il est ainsi possible de réaliser une rétroaction sur le levier, notamment pour le ramener à un point d'ancrage prédéterminé. Des interfaces haptiques de l'état de la technique qui comprennent uniquement des freins permettent seulement un amortissement de mouvements de pivotement du levier, et ne permettent pas de mettre en oeuvre une rétroaction.

De même, le dispositif comprend un moteur électrique 3b associé à un arbre moteur d'axe B lié à l'axe Y de tangage du levier, qui est de préférence un moteur couple et qui est avantageusement à entraînement direct.

Le dispositif d'application d'effort comprend en outre deux freins magnétorhéologiques, un premier frein 5a lié à l'axe A et un deuxième frein 5b lié à l'axe B.

Selon l'invention, les freins sont positionnés directement respectivement sur l'arbre du moteur 3a d'axe A et l'arbre du moteur 3b d'axe B. Par « positionnés directement », on entend que les pièces réalisant le freinage (par exemple des disques de frein, comme il sera vu ci-après) sont agencées directement sur l'arbre moteur. Il n'y a pas d'organes mécaniques intermédiaires entre les pièces réalisant le freinage et l'arbre moteur.

Notamment, le frein 5a est aligné directement sur l'axe A de l'arbre moteur. Si le moteur de roulis 3a est situé verticalement sous le levier, le frein 5a est préférentiellement intégré verticalement sur l'arbre moteur d'axe A. Il n'y a pas de renvoi d'angle entre le frein 5a et l'arbre moteur. De préférence, le frein 5b est de même intégré verticalement sur l'arbre moteur d'axe B.

Ainsi, l'encombrement horizontal de l'ensemble formé par le joint mécanique, les moteurs de retour d'effort et les freins rhéologiques est réduit.

Chacun des freins magnétorhéologiques comprend un dispositif de commande configuré pour faire varier un champ magnétique, ledit dispositif étant commandé électroniquement par l'unité de commande 8 via le calculateur 7, soit en secours mécanique en cas de défaillance du moteur 3a et/ou du moteur 3b, soit en loi d'amortissement, par exemple selon un procédé de contrôle décrit ci-après.

En alternative, les moteurs 3a et 3b de retour d'effort pourraient être omis du système de pilotage, en conservant le frein 5a configuré pour agir sur l'axe de roulis et le frein 5b configuré pour agir sur l'axe de tangage.

De façon optionnelle, le système de pilotage comprend également des capteurs de force 6a et 6b mesurant respectivement le couple exercé sur le levier en pivotement selon l'axe X et selon l'axe Y. Il s'agit par exemple de capteurs capacitifs ou piézoélectriques.

De tels capteurs sont notamment utiles si le système de pilotage comprend un mode de pilotage en effort, dans lequel le levier est immobilisé et l'unité de commande 8 détermine des signaux de commande des parties mobiles de l'aéronef en fonction des efforts appliqués sur le levier 1.

On notera toutefois qu'il est possible d'omettre les capteurs de force 6a et 6b, notamment dans le cas où les freins rhéologiques sont utilisés uniquement pour simuler une loi d'amortissement sur le levier. Du fait de l'absence d'organes mécaniques intermédiaires entre les freins rhéologiques et l'arbre moteur, les freins rhéologiques sont de préférence pilotés directement par un asservissement en vitesse. Le contrôle des freins ne requiert donc pas nécessairement une information de couple.

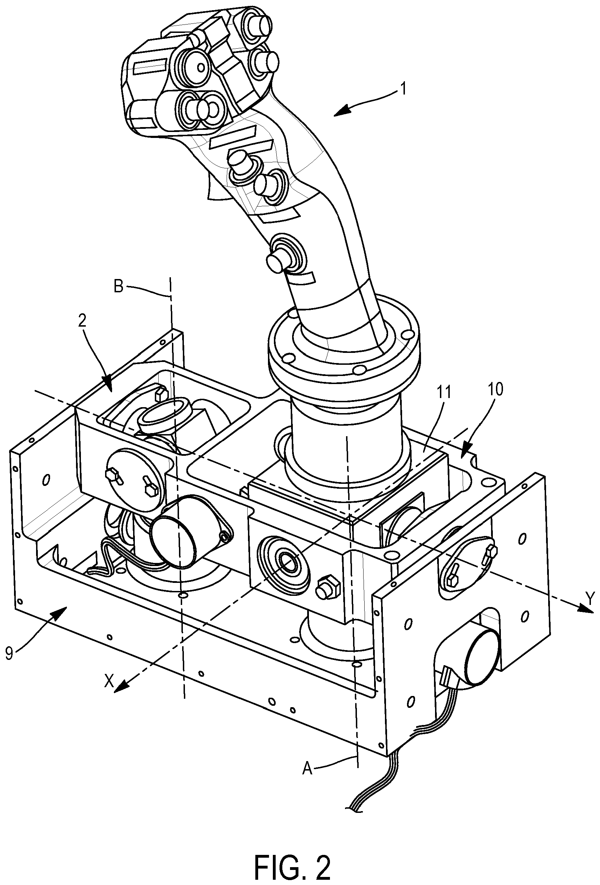

La **Figure 2** représente un exemple de réalisation. Le levier 1 est agencé sur un joint mécanique 2 fixé à un bâti 9 solidarisé à un châssis de l'aéronef. Les moteurs 3a et 3b (non visibles) sont déportés du levier. Les freins 5a et 5b sont eux aussi déportés du levier. Comme indiqué précédemment, les moteurs 3a et 3b et les freins 5a et 5b sont de préférence intégrés verticalement sous le joint mécanique.

Le levier 1 est libre à une extrémité et fixé à une première platine 11 à l'autre extrémité. La première platine 11 est mobile en rotation selon l'axe X et selon l'axe Y et est liée à une deuxième platine 10 du joint 2. L'axe X est lié à la première platine 11 de sorte qu'un pivotement de la première platine 11 autour de l'axe Y fait pivoter l'axe X autour de l'axe Y.

Deux transmissions, comprenant chacune un joint de Cardan, traduisent un mouvement de rotation du levier selon l'axe X, respectivement selon l'axe Y, en un mouvement de rotation d'un arbre (non représenté) s'étendant selon l'axe A, respectivement selon l'axe B.

Les moteurs 3a et 3b sont ainsi en prise directe sur le joint mécanique 2 et peuvent transmettre un effort résistif ou moteur en réponse aux mouvements de pivotement du levier 1 par le pilote, selon une loi d'effort ou une loi d'amortissement prédéterminée. Les moteurs 3a et 3b sont de préférence des moteurs « direct drive », ce qui permet d'accroître la durée de vie du mini-manche et ce qui permet de limiter les variations de couple parasites ressenties par l'utilisateur du manche.

Pour plus de détails sur la structure du joint 2 et sur la liaison mécanique avec les moteurs 3a et 3b, on pourra se référer à la Figure 1 du document FR 3 011 815 et à la description afférente.

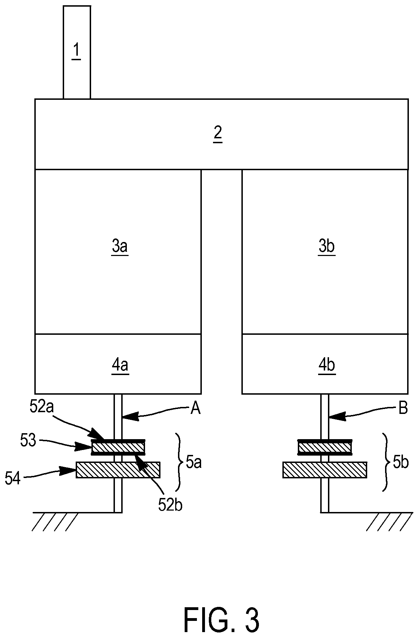

On a représenté en **Figure 3** une architecture du dispositif d'application d'effort intégré au mini-manche selon un premier mode de réalisation.

Dans cet exemple, le frein 5a, respectivement 5b, agit sur l'axe A, respectivement B, et se situe à l'opposé du joint mécanique 2 par rapport au moteur correspondant. Un avantage de cette configuration est de pouvoir déporter le frein magnétorhéologique par rapport au joint recevant le levier, ce qui permet de diminuer l'encombrement de l'espace au voisinage du levier et de gagner de la place dans le cockpit.

### Frein magnétorhéologique du dispositif d'application d'effort

On décrira dans toute la suite un frein magnétorhéologique 5a, le frein 5b étant de structure et de fonctionnement similaires au frein 5a.

Dans l'exemple de la Figure 3, un arbre de sortie du frein 5a s'étend directement selon l'axe A et est coaxial à un arbre du moteur de roulis 3a.

Le frein 5a comprend au moins deux pièces 52a et 52b en regard l'une de l'autre et adaptées pour être mises en mouvement l'une par rapport à l'autre. Dans le présent exemple, les pièces 52a et 52b sont adaptées pour tourner autour de l'axe A. Par « pièces en regard » on entend qu'au moins une partie des surfaces externes des deux pièces sont face à face sans être en contact.

Le frein comprend en outre un volume 53 délimité par les deux pièces en regard, adapté pour recevoir du fluide magnétorhéologique. Le volume 53 est hermétique pour ne pas laisser fuir le fluide magnétorhéologique.

On entend par « volume délimité par les deux pièces en regard » que les parties des surfaces des deux pièces qui se situent face à face sont, au moins partiellement et de préférence totalement, en contact avec le volume de fluide magnétorhéologique.

Un principe de fonctionnement du frein est de faire varier la résistance au cisaillement du fluide contenu dans le volume 53, les deux pièces 52a et 52b cisaillant le fluide au cours de leur rotation relative autour de l'axe A. Le couple de résistance au cisaillement exercé par le fluide est variable en fonction du champ magnétique.

De préférence, les deux pièces 52a et 52b sont situées l'une en face de l'autre selon l'axe A d'extension de l'arbre moteur. Les deux pièces cisaillent le fluide rhéologique sensiblement perpendiculairement à l'axe A de l'arbre moteur.

Pour faire varier le couple de résistance au cisaillement, et réaliser la commande du frein par le calculateur 7, le frein comprend un dispositif de commande 54 configuré pour appliquer un champ magnétique variable au sein du volume 53.

De préférence, le frein rhéologique 5a est asservi en vitesse, en fonction de la vitesse de rotation de l'arbre moteur. Le frein est commandé selon la vitesse de rotation de l'arbre moteur autour de son axe A, détectée par un capteur de vitesse qui peut être le capteur 6a ou un autre capteur.

En effet, le frein agit directement sur l'arbre moteur, sans organes mécaniques intermédiaires. Il n'est donc pas nécessaire de piloter le frein par un asservissement en couple.

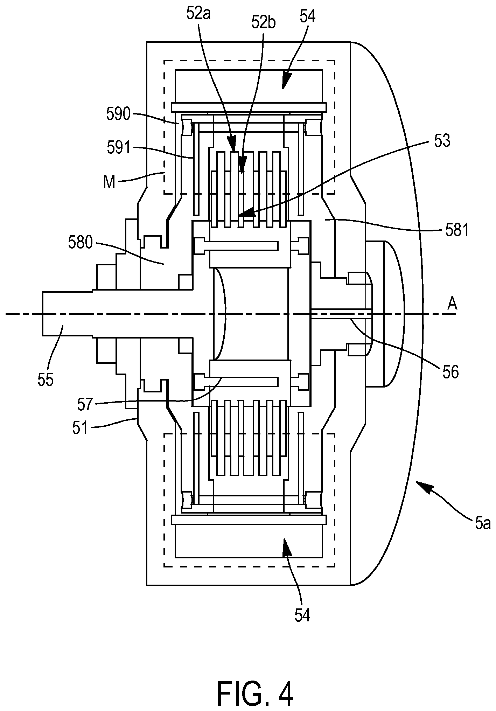

On donne en **Figure 4** une vue du frein magnétorhéologique 5a de la Figure 3 selon une vue en coupe passant par l'axe A.

Le frein comprend une enceinte 51 de forme cylindrique et centrée sur l'arbre d'entrée 55 s'étendant selon l'axe A. L'arbre d'entrée 55 correspond à l'arbre moteur du moteur de roulis 3a.

L'arbre de sortie 56 du frein est de préférence coaxial à l'arbre d'entrée 55. Dans le présent exemple, l'arbre de sortie 56 est fixé au bâti.

Au sein du frein, une pluralité de disques de frein sont compris entre une première paroi étanche 580 et une deuxième paroi étanche 581. Le frein comprend une alternance entre une série de disques montés sur un rotor 57 solidaires de l'arbre 55 d'entrée, et une série de disques montés solidaires à l'arbre 56 de sortie. Les disques de frein sont percés en leur centre et de préférence centrés sur l'axe A de l'arbre 55.

Notamment, le frein comprend un disque 52a solidaire de l'arbre d'entrée et un disque 52b consécutif solidaire de l'arbre de sortie. Les disques 52a et 52b sont ici adaptés pour tourner l'un par rapport à l'autre autour de l'axe A, lors d'une rotation de l'arbre de sortie relativement à l'arbre d'entrée.

De préférence, le disque 52a est centré sur l'arbre d'entrée 55 et est donc centré sur l'axe A. Le disque 52b est de préférence lui aussi centré sur l'axe A.

Entre les faces de deux disques de frein consécutifs, on ménage un volume étanche adapté pour recevoir du fluide magnétorhéologique à l'état liquide. Notamment, un volume 53 de fluide est délimité par les faces en regard des disques 52a et 52b. L'étanchéité de chacun des volumes est assurée par des joints d'étanchéité au niveau d'entretoises entre les disques. Le frein comprend une alternance de disques de frein et de volumes de fluide magnétorhéologique à des positions axiales différentes selon l'axe A.

Dans cet exemple, le volume de fluide compris entre deux faces de disques consécutifs est en contact avec plus de 50% de la surface desdites faces.

Conformément à l'invention, un dispositif de commande 54 est disposé à proximité des volumes de fluide. Ici, le dispositif de commande est formé de deux bobines s'étendant parallèlement à l'axe A au voisinage des disques de frein. La longueur de chacune des bobines est légèrement supérieure à la longueur totale sur laquelle s'étendent les disques de frein.

Selon une variante, le dispositif de commande 54 peut comprendre en outre un aimant permanent.

On a représenté en pointillés une ligne M de champ généré lorsqu'un courant circule à l'intérieur d'une bobine 54.

Le fluide magnétorhéologique peut être admis à l'intérieur du frein par l'intermédiaire de canaux de remplissage non représentés.

Le frein 5a comprend également des canaux de refroidissement 591 au voisinage des disques de frein. De l'air peut circuler dans l'enceinte 51 par des conduits d'aération 590.

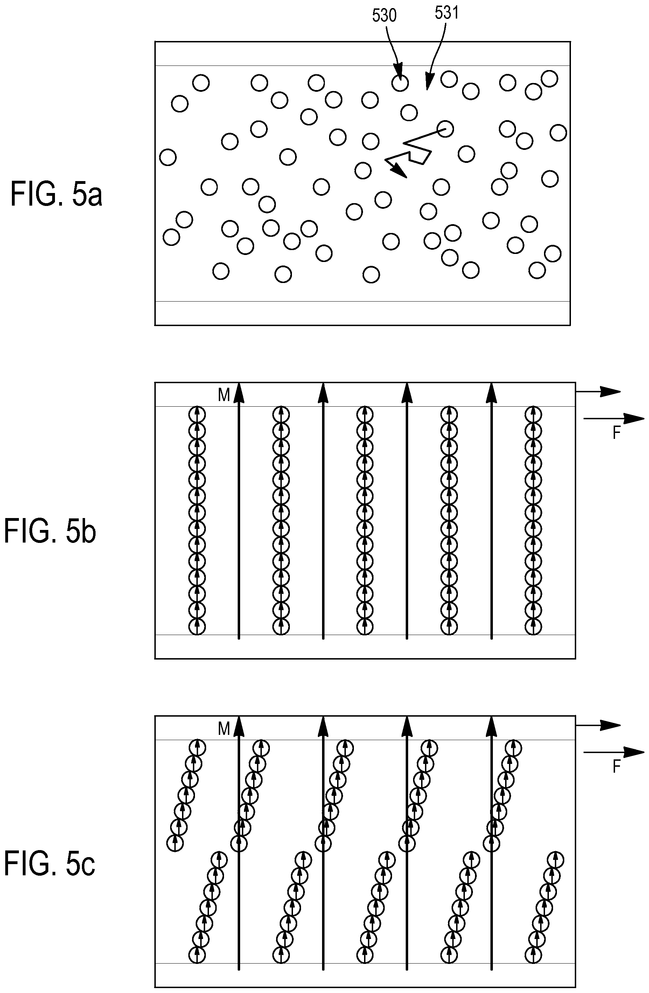

Le comportement du fluide magnétorhéologique du volume 53 au repos et en présence d'un champ magnétique est schématisé sur les **Figures 5a, 5b et 5c****.** Un fluide porteur 531, de préférence isolant, renferme une suspension de particules 530. De préférence, les particules sont d'une taille comprise entre 1 et 10 micromètres. Des particules métalliques, par exemple de fer, peuvent être utilisées comme particules magnétiques. Au repos, le mouvement des particules 530 est aléatoire comme représenté par la flèche de la Figure 5a et les particules n'exercent pas de résistance au cisaillement. Une résistance résiduelle au cisaillement des disques de frein est exercée par le fluide porteur.

La Figure 5b représente l'état du système lorsqu'une force de Lorentz F s'exerce sur les particules 530 du fait du champ magnétique M. Les particules 530 s'alignent sous forme de chaînes de particules parallèles aux lignes de champ magnétique, ce qui accroît la résistance du fluide magnétorhéologique au cisaillement. Le couple résistant du fluide magnétorhéologique dans son ensemble augmente de manière très importante par rapport au couple résistant du fluide porteur seul.

Les pièces 52a et 52b cisaillent le fluide confiné dans le volume 53 lorsqu'elles tournent l'une par rapport à l'autre.

Lorsque la résistance au cisaillement du fluide magnétorhéologique augmente, comme dans l'état de la Figure 5b, le fluide génère une contrainte de cisaillement au niveau du volume 53. Les mouvements du disque 52a et du disque 52b sont ainsi couplés.

Le couple résistant de tous les volumes de fluide, considérés ensemble, peut être suffisant pour coupler l'arbre 55 d'entrée et l'arbre 56 de sortie. Si l'arbre de sortie est fixe, par exemple s'il est fixé au bâti comme dans le présent exemple, l'arbre moteur est freiné, voire bloqué, dans son pivotement selon l'axe de roulis et/ou de tangage.

Sur la Figure 5c, la force de Lorentz subie par les particules 530 est accrue du fait de l'augmentation du champ magnétique. Un seuil de glissement du fluide magnétorhéologique a été dépassé ; les chaînes de particules ne sont plus en mesure de s'aligner selon les lignes de champ, et dérivent dans la direction de la force F, pouvant localement se casser.

Le couple résistant exercé sur le levier reste sensiblement constant et un déplacement se produit entre l'entrée et la sortie du frein magnétorhéologique.

La résistance au cisaillement exercée par le fluide magnétorhéologique dépend ainsi du champ magnétique, qui est lui-même dépendant du courant appliqué aux bornes des bobines.

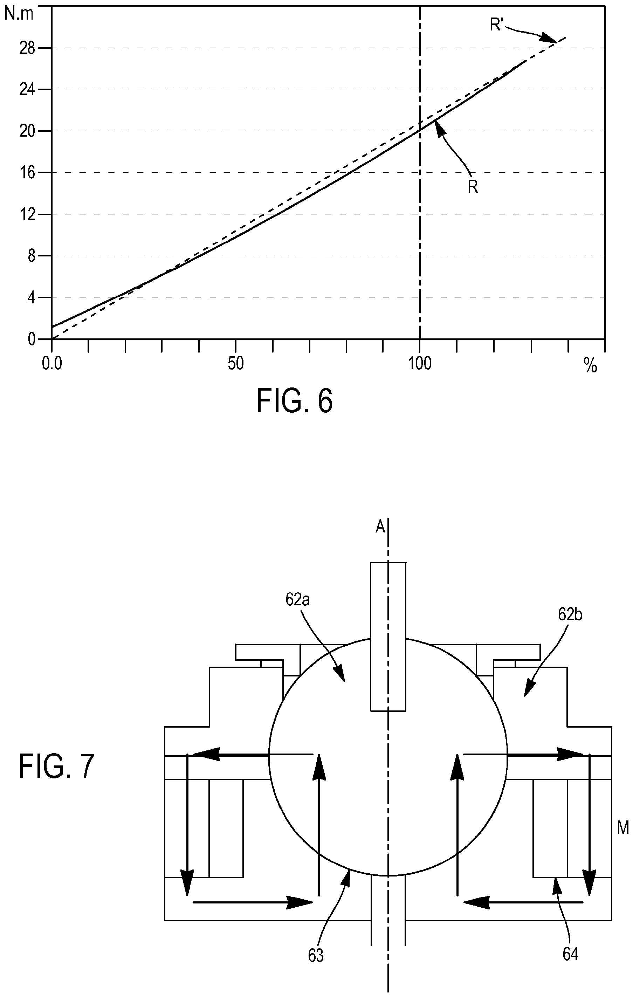

On a représenté en **Figure 6** la relation entre l'intensité du courant aux bobines (en abscisse) et le couple résistant généré par un frein magnétorhéologique (en ordonnée) selon un exemple.

Le frein est dimensionné pour fournir un couple résistant de 20 N.m en fonctionnement optimal à 100% de courant électrique. Pour une tension d'alimentation en DC de 36 volts, le courant 100% correspond à 0,5 milliampère.

A 0% il existe une précharge du frein avec un couple d'environ 1 N.m. Le couple augmente ensuite avec l'intensité du courant de manière quasi-linéaire, selon la courbe R. Une approximation linéaire de la courbe R est représentée par la droite R'.

Ainsi, le frein magnétorhéologique constitue une solution satisfaisante pour exercer de manière contrôlée un couple résistant.

Le contrôle de ce frein est simple puisqu'il suffit de maîtriser le courant circulant aux bornes du dispositif de commande du champ magnétique pour faire varier le couple résistif, dans les limites du seuil de glissement du fluide. Ce frein est donc avantageusement intégré à un mini-manche de pilotage pour fournir une voie de retour d'effort additionnelle et largement indépendante par rapport à d'éventuelles voies existantes reposant sur l'usage de moteurs électriques.

De plus, le fluide magnétorhéologique présente un seuil d'effort naturel au-delà duquel le couple exercé sur les disques de frein est trop important pour que le fluide assure sa fonction de résistance au cisaillement. On garantit ainsi que le levier est mis en mouvement si l'effort exercé par le pilote dépasse un certain seuil, ce qui limite l'endommagement des composants du mini-manche. On peut prévoir des butées mécaniques dans le mini-manche pour assurer une fonction de retenue du levier lorsque le seuil d'effort du fluide est dépassé.

La **Figure 7** illustre un exemple alternatif de frein magnétorhéologique pouvant être utilisé en lieu et place du frein visible sur la Figure 3.

Dans cet exemple, le frein rhéologique comprend une sphère 62a au centre de laquelle passe l'arbre moteur du moteur de roulis 3a, ledit arbre s'étendant le long de l'axe A. Le frein comporte également un socle sphérique 62b recevant la sphère 62a. Un mouvement de pivotement du levier 1 selon l'axe de roulis et/ou de tangage entraîne une rotation de l'arbre autour de l'axe A et un mouvement rotatif de la sphère par rapport au socle.

Une partie basse de la sphère 62a, une partie haute du socle 62b et des joints d'étanchéité forment le volume 63 de fluide. Des bobines 64 disposées au voisinage du volume 63 servent de dispositif de commande du champ magnétique.

Les bobines sont agencées de sorte que les lignes de champ magnétique M passent par une large surface de la sphère 62a. On peut ainsi contrôler la résistance au cisaillement au niveau de la sphère 62a et, par conséquent, moduler le retour d'effort sur le levier.

Selon une variante, un premier arbre d'un moteur de roulis du levier et un deuxième arbre d'un moteur de tangage du levier passent tous deux par la sphère 62a.

Si le champ magnétique est suffisant, le frein exerce ainsi un retour d'effort à la fois selon l'axe de roulis et selon l'axe de tangage. Un avantage de cette variante est d'utiliser un seuil frein pour freiner ou bloquer les mouvements du levier selon ses deux degrés de liberté de pivotement.

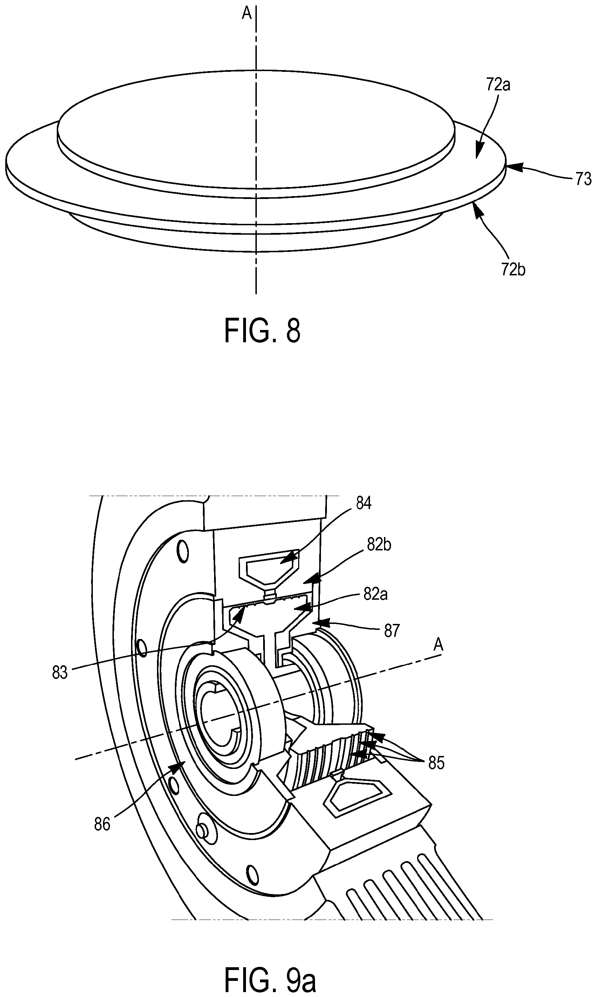

Un autre exemple alternatif de frein magnétorhéologique est illustré en **Figure 8****.** Dans cet exemple, le fluide magnétorhéologique est sollicité en traction et/ou en compression.

Le frein comprend deux disques 72a et 72b centrés sur l'arbre moteur d'axe A, le disque 72a étant mobile par rapport au disque 72b en translation selon l'axe A. Dans cet exemple, le mouvement de pivotement du levier selon l'axe de roulis entraîne un mouvement de translation du disque 72a, un mécanisme de transmission mécanique reliant l'arbre au levier.

Un volume de fluide magnétorhéologique est confiné dans un volume 73 entre les deux disques. Un dispositif de commande, non représenté sur la figure, est adapté pour générer un champ magnétique sensiblement parallèle à l'axe A.

Lorsque le champ magnétique est inférieur au seuil de glissement, la résistance du fluide à la traction et à la compression selon l'axe A augmente avec le champ magnétique, lui-même dépendant du courant aux bornes du dispositif de commande.

Les exemples de freins magnétorhéologiques des Figures 4 à 9 se transposent aisément pour des freins électrorhéologiques. Le matériau rhéologique est alors un fluide électrorhéologique comprenant des particules conductrices en suspension. Le dispositif de commande est alors configuré pour appliquer un champ électrique variable au niveau d'un volume de fluide électrorhéologique du frein.

Pour un usage dans un mini-manche de pilotage d'aéronef, le couple de glissement du matériau rhéologique est de préférence compris entre 10 N.m et 100 N.m et encore de préférence entre 10 N.m et 75 N.m. En effet, le couple de glissement doit être inférieur à un couple seuil déterminé par le couple maximal transmissible par un moteur de roulis ou de tangage grippé.

De préférence, le frein doit être capable de restituer un effort résistif entre 100 et 150 Newton, de préférence d'environ 120 Newton, sur le levier.

On a représenté un autre exemple de frein rhéologique sur la **Figure 9a****.** Il s'agit ici d'un frein à poudre. Le matériau rhéologique utilisé dans ce frein est une poudre magnétique.

Ce frein est constitué de deux disques de frein 86 et 87 dont l'entrefer est partiellement rempli d'une poudre magnétique dans un volume 83.

Les disques sont centrés sur l'axe A. Le volume 83 est compris entre une surface radiale externe du rotor 82a et une surface radiale interne du stator 82b. Lesdites deux surfaces s'étendent sensiblement parallèlement à l'axe A et se font face. Lorsque le rotor 82a tourne autour de l'axe A par rapport au stator 82b, le rotor 82a cisaille la poudre magnétique comprise dans le volume 83, notamment au niveau de dents 85 du rotor.

Les dents 85 correspondent à des canaux creusés dans la surface radiale externe du rotor 82a.

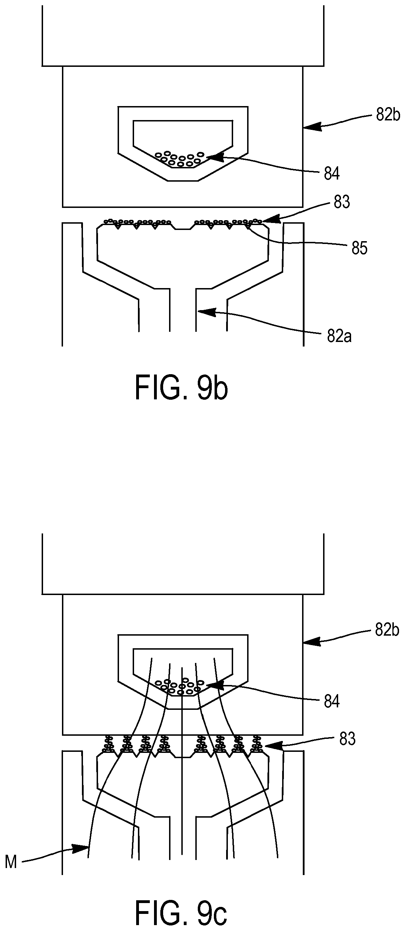

Lorsque la poudre magnétique n'est pas soumise à un champ magnétique ou est soumise à un champ magnétique négligeable, la poudre magnétique se répartit par gravité dans l'entrefer et génère un faible couple résistant au cisaillement, par friction entre la poudre et le rotor. On a représenté cet état du système sur la **Figure 9b****.**

A l'inverse, lorsqu'on applique un champ magnétique au volume 83, la poudre contenue dans le volume 83 s'aligne selon les lignes de champ.

Ainsi, les grains de poudre créent des structures de poudre s'étendant entre les surfaces en regard du rotor 82a et du stator 82b. Ces structures sont visibles sur la **Figure 9c****.** Ces structures exercent un couple résistif au cisaillement exercé par le rotor 82a. Les disques de frein sont ainsi couplés.

Le champ magnétique variable est ici exercé par deux bobines 84 commandées électriquement par le calculateur. Les bobines 84 est agencée par rapport au volume 83 de sorte que les lignes de champ magnétique soient sensiblement perpendiculaires aux surfaces en regard du rotor 82a et du stator 82b.

La poudre magnétique contenue en dispersion dans le volume 83 constitue un matériau rhéologique. La résistance de la poudre magnétique au cisaillement exercé par le rotor dépend du champ magnétique qui lui est appliqué, ce champ étant contrôlable électriquement. Plus le champ magnétique exercé par les bobines est important, plus le couple résistif exercé par la poudre magnétique augmente.

En revanche, si un couple de glissement est dépassé au niveau du frein à poudre, le couple résistif exercé par la poudre magnétique du volume 83 n'augmente plus avec le champ magnétique, et les disques de frein ne sont plus correctement couplés.

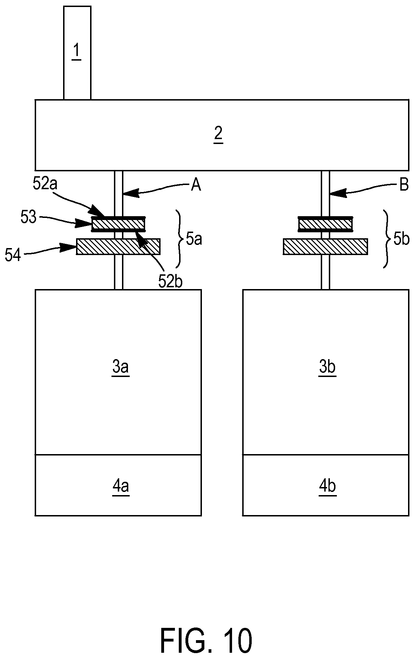

On a représenté en **Figure 10** un exemple alternatif d'architecture du dispositif d'application d'effort intégré au mini-manche.

Dans cet exemple, le frein 5a admet comme arbre de sortie l'arbre moteur du moteur de roulis 3a, et le frein 5b admet comme arbre de sortie l'arbre moteur du moteur de tangage 3b.

Les freins rhéologiques correspondent à l'un quelconque des exemples qui précèdent. Chaque frein est ici positionné proche du joint mécanique 2, entre le moteur 3a ou 3b correspondant et le joint 2.

Dans un autre exemple, un frein magnétorhéologique est lié directement à un mouvement de pivotement du levier. Par exemple pour l'axe X de roulis du levier, le mouvement de roulis peut entraîner un arbre s'étendant selon l'axe X, un frein rhéologique étant positionné sur ledit arbre, de préférence à proximité du joint mécanique 2.

Selon un exemple encore alternatif, les moteurs 3a et 3b sont supprimés et un amortissement des mouvements de pivotement du levier est assuré uniquement par les freins.

On décrit maintenant des exemples de procédés d'utilisation d'un mini-manche de pilotage à dispositif d'application d'effort. Le mini-manche comprend ici un ou plusieurs freins selon l'un quelconque des exemples précédents. Le système de pilotage de la Figure 1 peut être configuré pour mettre en oeuvre l'un et/ou l'autre de ces deux procédés.

### Contrôle en secours mécanique

Dans un mode de réalisation, le dispositif de commande du frein magnétorhéologique est configuré pour appliquer un champ magnétique augmentant la viscosité du matériau rhéologique en cas de défaillance sur une chaîne de traitement d'un moteur (de roulis et/ou de tangage) associé au frein. La chaîne de traitement du moteur comprend notamment le calculateur 7.

Dans ce mode, le dispositif d'application d'effort comprend donc un moteur de roulis et/ou de tangage, de préférence électrique, associé à un frein qui peut prendre le relais du moteur en cas de défaillance.

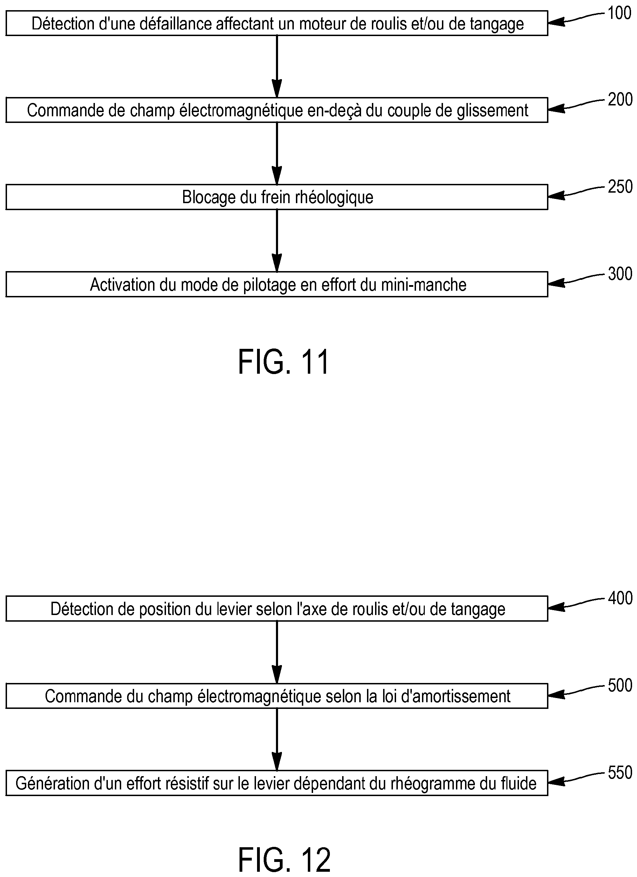

Un procédé de contrôle du dispositif d'application d'effort en mode de secours mécanique est représenté en **Figure 11****.**

A une étape 100, une défaillance sur une chaîne de traitement du moteur associé au frein est détectée, par exemple une panne mécanique du moteur qui n'est plus en mesure de fournir un retour d'effort suffisant sur l'axe de pivotement du levier qui lui est associé, ou bien une défaillance dans le traitement ou la communication des signaux de commande du moteur ou une parte d'alimentation du calculateur 7.

A une étape 200, une commande de champ magnétique est transmise par l'unité 8 au dispositif de commande du frein rhéologique, par exemple à une interface électronique commandant une bobine du dispositif de commande.

La commande de champ magnétique est telle que la viscosité du matériau rhéologique est accrue, ce qui augmente la résistance au cisaillement au niveau du frein de sorte que le couple résistant exercé par le frein sur l'axe de roulis et/ou de tangage augmente, sans qu'un seuil de glissement du matériau rhéologique ne soit dépassé. Si le couple exercé par le pilote sur le levier dépasse le seuil de glissement, le couple résistif du frein n'augmente plus et la sortie du frein rhéologique est mise en mouvement par rapport à l'entrée du frein.

De préférence, le levier et le frein sont dimensionnés de sorte qu'à une étape 250, le levier soit bloqué en pivotement selon les axes de roulis et de tangage, sous l'effet de la commande de champ.

Dans ce cas, le système de pilotage entre à une étape 300 dans un mode de pilotage en effort du manche.

Dans ce mode, un capteur 6a d'effort de roulis et un capteur 6b d'effort de tangage prennent le relais des capteurs de position et/ou de vitesse sur les axes de roulis et de tangage du levier. Les signaux de commande de pilotage générés par l'unité 8 de commande (le FCU) sont fonction de signaux de détection d'effort sur le levier. Ainsi, le pilote contrôle les mouvements des parties mobiles de l'aéronef en fonction de la force qu'il exerce sur le levier.

Le mode de pilotage en effort peut ensuite être désactivé dès lors que la défaillance sur la chaîne de traitement du moteur associé au frein est résolue. Ainsi, les capteurs d'effort 6a et 6b peuvent n'être utilisés que pendant des périodes de défaillance.

Un avantage du procédé de contrôle en secours mécanique est que le mini-manche ne peut pas basculer dans un mode où le pilote peut pivoter librement le levier. Le contrôle des axes de roulis et de tangage du levier est sécurisé, le frein rhéologique fournissant une voie supplémentaire d'application d'effort sur le manche.

### Contrôle en loi d'amortissement ou en loi d'effort

Dans un autre mode, le dispositif de commande du frein magnétorhéologique est configuré pour exercer un champ magnétique qui est fonction d'une position et/ou d'une vitesse du levier, selon une loi prédéterminée.

Un ou plusieurs freins peuvent agir seuls sur les axes de roulis et de tangage, sans moteurs électriques, pour fournir un retour d'effort sur le levier selon une loi d'amortissement.

Un moteur de roulis et/ou un moteur de tangage peut être associé à un ou plusieurs freins magnétorhéologiques pour restituer un effort sur le levier selon une loi d'effort. Par exemple, à des positions extrêmes du levier, le moteur peut fournir un couple moteur pour ramener le levier à une position d'équilibre.

Un procédé de contrôle du dispositif d'application d'effort en loi d'amortissement est représenté en **Figure 12****.**

La position du levier est détectée à une étape 400 et des signaux de détection de position sont transmis à l'unité de commande de vol.

A une étape 500, une commande de champ magnétique est déterminée à partir des signaux de détection de position, selon une loi d'amortissement prédéterminée. La loi d'amortissement est par exemple préenregistrée dans l'unité 8 de commande de vol.

La commande de champ est transmise au dispositif d'application d'effort, qui génère un effort résistif contre le pivotement du levier à une étape 550. L'effort résistif exercé par le frein rhéologique est fonction du champ exercé par le dispositif de commande du frein, selon le rhéogramme du matériau rhéologique contenu dans le frein.

Le contrôle en loi d'amortissement ou en loi d'effort est avantageux, car les freins rhéologiques complètent ou remplacent des moteurs électriques dans leur fonction de retour d'effort sur le levier. Il n'est donc pas nécessaire d'intégrer des moteurs électriques dimensionnés pour assurer l'intégralité du retour d'effort. La masse, l'encombrement et la consommation électrique du mini-manche de pilotage peuvent être réduits.

## Revendications

1. Dispositif d'application d'effort pour un manche de pilotage d'aéronef, le dispositif comprenant :
- un joint mécanique (2) configuré pour recevoir un levier (1) de manche de pilotage d'aéronef, le joint mécanique (2) étant mobile en rotation autour d'un axe de roulis (X) et autour d'un axe de tangage (Y),
- un moteur d'effort (3a) comprenant un arbre moteur s'étendant selon un troisième axe (A), la rotation de l'arbre moteur autour du troisième axe étant liée à la rotation du joint mécanique (2) autour d'un axe pris parmi l'axe de roulis ou l'axe de tangage, le moteur d'effort étant configuré pour exercer un couple résistif sur l'arbre moteur,
- un frein rhéologique (5a) comprenant deux pièces (52a, 52b) en regard l'une de l'autre,
le frein comprenant un volume (53) délimité par lesdites deux pièces, le volume étant adapté pour contenir un matériau rhéologique, l'une (52a) desdites deux pièces étant agencée sur l'arbre moteur et étant mobile en rotation autour du troisième axe (A) par rapport à l'autre (52b) desdites deux pièces,
- un dispositif de commande (54) commandé pour appliquer un champ électromagnétique au sein dudit volume (53) de sorte à faire varier une résistance du matériau rhéologique au cisaillement.

2. Dispositif d'application d'effort selon la revendication 1, dans lequel le matériau rhéologique est un fluide magnétorhéologique comprenant des particules magnétiques en suspension, ou dans lequel le matériau rhéologique est un fluide électrorhéologique comprenant des particules conductrices en suspension,
le dispositif de commande (54) étant commandé pour appliquer un champ magnétique ou électrique variable.

3. Dispositif d'application d'effort selon l'une quelconque des revendications 1 ou 2, dans lequel le moteur d'effort (3a) est un moteur couple.

4. Dispositif d'application d'effort selon l'une quelconque des revendications 1 à 3, dans lequel le moteur d'effort (3a) est un moteur à entraînement direct.

5. Dispositif d'application d'effort selon l'une quelconque des revendications 1 à 4, dans lequel le frein rhéologique est positionné sur l'arbre moteur à l'opposé du joint mécanique (2) par rapport au moteur d'effort (3a)

6. Dispositif d'application d'effort selon l'une quelconque des revendications 1 à 4, dans lequel le frein rhéologique est positionné sur l'arbre moteur entre le joint mécanique (2) et le moteur d'effort (3a).

7. Dispositif d'application d'effort selon l'une quelconque des revendications 1 à 6, le dispositif d'application d'effort comprenant un capteur de vitesse de rotation de l'arbre moteur, le frein rhéologique (5a) étant piloté selon un asservissement en vitesse en fonction d'une vitesse de rotation acquise par ledit capteur.

8. Dispositif d'application d'effort selon l'une quelconque des revendications 1 à 7, dans lequel le dispositif de commande (54) est commandé pour appliquer un champ électromagnétique augmentant la résistance du matériau rhéologique au cisaillement en cas de défaillance sur une chaîne de traitement du moteur d'effort (3a).

9. Dispositif d'application d'effort selon la revendication 7, comprenant en outre un capteur d'effort de roulis (6a) configuré pour mesurer un couple de roulis exercé sur le levier (1),
et/ou un capteur d'effort de tangage (6b) configuré pour mesurer un couple de tangage exercé sur le levier (1),
pour permettre un pilotage en effort du manche de pilotage.

10. Dispositif d'application d'effort selon l'une quelconque des revendications 1 à 9, dans lequel le frein rhéologique (5a) est configuré pour exercer un couple résistif sur le joint mécanique dont une valeur se limite à 70 N.m, de préférence à 25 N.m, en fonction d'un courant électrique fourni au dispositif de commande (54).

11. Dispositif d'application d'effort selon l'une quelconque des revendications 1 à 10, dans lequel le dispositif de commande (54) est commandé selon une loi prédéterminée pour exercer un champ électromagnétique qui est fonction d'une position et/ou d'une vitesse du levier (1).

12. Dispositif d'application d'effort selon l'une quelconque des revendications 1 à 11, dans lequel le moteur d'effort est un moteur de roulis (3a), la rotation de l'arbre moteur étant liée à la rotation du joint mécanique (2) autour de l'axe de roulis (X), le frein rhéologique (5a) étant adapté pour exercer un retour d'effort sur l'axe de roulis (X),
le dispositif comprenant en outre un moteur de tangage (3b) comprenant un arbre moteur de tangage s'étendant selon un quatrième axe (B), la rotation de l'arbre moteur de tangage étant liée à la rotation du joint mécanique autour de l'axe de tangage (Y),
le dispositif comprenant un frein rhéologique (5b) supplémentaire adapté pour exercer un retour d'effort sur l'axe de tangage (Y).

13. Manche actif de pilotage d'aéronef comprenant :
- un dispositif d'application d'effort selon l'une quelconque des revendications 1 à 12,
- un levier (1) apte à tourner autour de l'axe de roulis (X) et de l'axe de tangage (Y), le levier étant agencé sur le joint mécanique (2).

14. Procédé de contrôle en secours mécanique d'un dispositif d'application d'effort sur un manche de pilotage d'aéronef, le procédé étant mis en oeuvre à l'aide d'un dispositif d'application d'effort selon l'une quelconque des revendications 1 à 12 et comprenant les étapes de :
- détection (100) d'une défaillance sur une chaîne de traitement d'un moteur d'effort (3a) du dispositif d'application d'effort,
- génération d'une commande (200) de champ électromagnétique en-deçà d'un couple de glissement d'un matériau rhéologique contenu dans un frein rhéologique (5a) du dispositif d'application d'effort, ladite commande étant transmise à un dispositif de commande du dispositif d'application d'effort pour bloquer le levier,
- de façon optionnelle, activation (300) d'un mode de pilotage en effort du manche de pilotage.

15. Procédé de contrôle en loi d'amortissement d'un dispositif d'application d'effort sur un manche de pilotage d'aéronef, le procédé étant mis en oeuvre à l'aide d'un dispositif d'application d'effort selon l'une quelconque des revendications 1 à 12 et comprenant les étapes de :
- détection (400) d'une position et/ou d'une vitesse d'un levier (1) en rotation autour d'un axe de roulis (X) ou d'un axe de tangage (Y), le levier (1) étant agencé sur un joint mécanique (2) du dispositif d'application d'effort,
- génération d'une commande (500) de champ électromagnétique selon une loi prédéterminée en fonction de la position et/ou de la vitesse détectée, ladite commande étant transmise à un dispositif de commande du dispositif d'application d'effort, de sorte qu'un frein rhéologique du dispositif d'application d'effort exerce un couple résistif s'opposant à un mouvement de rotation du levier en complément d'un moteur d'effort (3a) du dispositif d'application d'effort.

## Patentansprüche

1. Vorrichtung zur Anwendung einer Kraft für einen Steuerknüppel eines Luftfahrzeugs, wobei die Vorrichtung umfasst:
- eine mechanische Verbindung (2), die ausgelegt ist, um einen Hebel (1) eines Steuerknüppels eines Luftfahrzeugs aufzunehmen, wobei die mechanische Verbindung (2) um eine Rollachse (X) und um eine Nickachse (Y) drehbeweglich ist,
- einen Kraftmotor (3a), der eine Antriebswelle umfasst, die sich gemäß einer dritten Achse (A) erstreckt, wobei die Drehung der Antriebswelle um die dritte Achse mit der Drehung der mechanischen Verbindung (2) um eine Achse verbunden ist, die aus der Rollachse oder der Nickachse ausgewählt ist, wobei der Kraftmotor ausgelegt ist, um ein Widerstandsmoment auf die Antriebswelle auszuüben,
- eine rheologische Bremse (5a), die zwei einander zugewandte Teile (52a, 52b) umfasst,
wobei die Bremse ein Volumen (53) umfasst, das von den beiden Teilen begrenzt ist, wobei das Volumen geeignet ist, ein rheologisches Material zu enthalten, wobei eins (52a) der beiden Teile auf der Antriebswelle eingerichtet ist und um die dritte Achse (A) relativ zu dem anderen (52b) der beiden Teile drehbeweglich ist,
- eine Steuervorrichtung (54), die gesteuert wird, um ein elektromagnetisches Feld innerhalb des Volumens (53) derart anzulegen, dass eine Scherfestigkeit des rheologischen Materials verändert wird.

2. Vorrichtung zur Anwendung einer Kraft nach Anspruch 1, wobei das rheologische Material ein magnetorheologisches Fluid ist, das suspendierte magnetische Partikel umfasst, oder wobei das rheologische Material ein elektrorheologisches Fluid ist, das suspendierte leitfähige Partikel umfasst,
wobei die Steuervorrichtung (54) gesteuert wird, um ein variables magnetisches oder elektrisches Feld anzulegen.

3. Vorrichtung zur Anwendung einer Kraft nach einem der Ansprüche 1 oder 2, wobei der Kraftmotor (3a) ein Drehmomentmotor ist.

4. Vorrichtung zur Anwendung einer Kraft nach einem der Ansprüche 1 bis 3, wobei der Kraftmotor (3a) ein Motor mit Direktantrieb ist.

5. Vorrichtung zur Anwendung einer Kraft nach einem der Ansprüche 1 bis 4, wobei die rheologische Bremse auf der Antriebswelle gegenüber der mechanischen Verbindung (2) relativ zum Kraftmotor (3a) positioniert ist.

6. Vorrichtung zur Anwendung einer Kraft nach einem der Ansprüche 1 bis 4, wobei die rheologische Bremse auf der Antriebswelle zwischen der mechanischen Verbindung (2) und dem Kraftmotor (3a) positioniert ist.

7. Vorrichtung zur Anwendung einer Kraft nach einem der Ansprüche 1 bis 6, wobei die Vorrichtung zur Anwendung einer Kraft einen Drehgeschwindigkeitssensor der Antriebswelle umfasst, wobei die rheologische Bremse (5a) gemäß einer Geschwindigkeitsregelung in Abhängigkeit von einer von dem Sensor erfassten Drehgeschwindigkeit gesteuert wird.

8. Vorrichtung zur Anwendung einer Kraft nach einem der Ansprüche 1 bis 7, wobei die Steuervorrichtung (54) gesteuert wird, um ein elektromagnetisches Feld anzulegen, das die Scherfestigkeit des rheologischen Materials erhöht, wenn ein Fehler in einer Verarbeitungskette des Kraftmotors (3a) auftritt.

9. Vorrichtung zur Anwendung einer Kraft nach Anspruch 7, umfassend ferner einen Rollkraftsensor (6a), der ausgelegt ist, um ein auf den Hebel (1) ausgeübtes Rollmoment zu messen,
und/oder einen Nickkraftsensor (6b), der ausgelegt ist, um ein auf den Hebel (1) ausgeübtes Nickmoment zu messen,
um eine Kraftsteuerung des Steuerknüppels zu ermöglichen.

10. Vorrichtung zur Anwendung einer Kraft nach einem der Ansprüche 1 bis 9, wobei die rheologische Bremse (5a) ausgelegt ist, um ein Widerstandsmoment auf die mechanische Verbindung auszuüben, von dem ein Wert auf 70 N.m, vorzugsweise auf 25 N.m, begrenzt ist, in Abhängigkeit von einem elektrischen Strom, der der Steuervorrichtung (54) zugeführt wird.

11. Vorrichtung zur Anwendung einer Kraft nach einem der Ansprüche 1 bis 10, wobei die Steuervorrichtung (54) nach einem vorbestimmten Gesetz gesteuert wird, um ein elektromagnetisches Feld auszuüben, das von einer Position und/oder einer Geschwindigkeit des Hebels (1) abhängt.

12. Vorrichtung zur Anwendung einer Kraft nach einem der Ansprüche 1 bis 11, wobei der Kraftmotor ein Rollmotor (3a) ist, wobei die Drehung der Antriebswelle mit der Drehung der mechanischen Verbindung (2) um die Rollachse (X) verbunden ist, wobei die rheologische Bremse (5a) geeignet ist, eine Kraftrückkopplung auf die Rollachse (X) auszuüben,
wobei die Vorrichtung ferner einen Nickmotor (3b) umfasst, der eine Nickantriebswelle umfasst, die sich gemäß einer vierten Achse (B) erstreckt, wobei die Drehung der Nickantriebswelle mit der Drehung der mechanischen Verbindung um die Nickachse (Y) verbunden ist,
wobei die Vorrichtung eine zusätzliche rheologische Bremse (5b) umfasst, die geeignet ist, eine Kraftrückkopplung auf die Nickachse (Y) auszuüben.

13. Aktiver Steuerknüppel eines Luftfahrzeugs, umfassend:
- eine Vorrichtung zur Anwendung einer Kraft nach einem der Ansprüche 1 bis 12,
- einen Hebel (1), der imstande ist, sich um die Rollachse (X) und um die Nickachse (Y) zu drehen, wobei der Hebel auf der mechanischen Verbindung (2) eingerichtet ist.

14. Verfahren zur mechanischen Notsteuerung einer Vorrichtung zur Anwendung einer Kraft auf einen Steuerknüppel eines Luftfahrzeugs, wobei das Verfahren mit Hilfe einer Vorrichtung zur Anwendung einer Kraft nach einem der Ansprüche 1 bis 12 durchgeführt wird und die folgenden Schritte umfasst:
- Erfassen (100) eines Fehlers in einer Verarbeitungskette eines Kraftmotors (3a) der Vorrichtung zur Anwendung einer Kraft,
- Erzeugen eines elektromagnetischen Feldbefehls (200) unterhalb eines Gleitmoments eines rheologischen Materials, das in einer rheologischen Bremse (5a) der Vorrichtung zur Anwendung einer Kraft enthalten ist, wobei der Befehl an eine Steuervorrichtung der Vorrichtung zur Anwendung einer Kraft übertragen wird, um den Hebel zu blockieren,
- optional Aktivieren (300) eines Kraftsteuerungsmodus des Steuerknüppels.

15. Verfahren zur Dämpfungsgesetzsteuerung einer Vorrichtung zur Anwendung einer Kraft auf einen Steuerknüppel eines Luftfahrzeugs, wobei das Verfahren mit Hilfe einer Vorrichtung zur Anwendung einer Kraft nach einem der Ansprüche 1 bis 12 durchgeführt wird und die folgenden Schritte umfasst:
- Erfassen (400) einer Position und/oder einer Geschwindigkeit eines Hebels (1), der sich um eine Rollachse (X) oder eine Nickachse (Y) dreht, wobei der Hebel (1) an einer mechanischen Verbindung (2) der Vorrichtung zur Anwendung einer Kraft angeordnet ist,
- Erzeugen eines elektromagnetischen Feldbefehls (500) gemäß einem vorbestimmten Gesetz in Abhängigkeit von der erfassten Position und/oder Geschwindigkeit, wobei der Befehl an eine Steuervorrichtung der Vorrichtung zur Anwendung einer Kraft übertragen wird, so dass eine rheologische Bremse der Vorrichtung zur Anwendung einer Kraft ein Widerstandsmoment ausübt, das einer Drehbewegung des Hebels ergänzend zu einem Kraftmotor (3a) der Vorrichtung zur Anwendung einer Kraft entgegenwirkt.

## Claims

1. A force application device for an aircraft pilot stick, the device comprising:
- a mechanical joint (2) configured to receive a lever (1) of an aircraft pilot stick, the mechanical joint (2) being rotatably movable about a roll axis (X) and about a pitch axis (Y),
- a force motor (3a) comprising a motor shaft extending along a third axis (A), the rotation of the motor shaft about the third axis being linked to the rotation of the mechanical joint (2) about an axis taken among the roll axis or the pitch axis, the force motor being configured to exert a resistive torque on the motor shaft,
- a rheological brake (5a) comprising two facing parts (52a, 52b) facing each other,
the brake comprising a volume (53) delimited by said two facing parts, the volume being adapted to contain a rheological material, one (52a) of said two parts being arranged on the motor shaft and being rotatably movable about the third axis (A) relative to the other (52b) of said two facing parts,
- a control device (54) controlled to apply an electromagnetic field within said volume (53) so as to vary shear strength of the rheological material.

2. The force application device according to claim 1, wherein the rheological material is a magnetorheological fluid comprising suspended magnetic particles, or wherein the rheological material is an electrorheological fluid comprising suspended conductive particles,
the control device (54) being controlled to apply a variable magnetic or electric field.

3. The force application device according to anyone of claims 1 or 2, wherein the force motor (3a) is a torque motor.

4. The force application device according to anyone of claims 1 to 3, wherein the force motor (3a) is a direct drive motor.

5. The force application device according to anyone of claims 1 to 4, wherein the rheological brake is positioned on the motor shaft opposite the mechanical joint (2) relative to the force motor (3a).

6. The force application device according to anyone of claims 1 to 4, wherein the rheological brake is positioned on the motor shaft between the mechanical joint (2) and the force motor (3a).

7. The force application device according to anyone of claims 1 to 6, the force application device comprising a motor shaft rotational speed sensor, the rheological brake (5a) being piloted according to a speed servo-control as a function of a rotational speed acquired by said sensor.

8. The force application device according to anyone of claims 1 to 7, wherein the control device (54) is controlled to apply an electromagnetic field increasing the shear strength of the rheological material in the event of fault on a processing chain of the force motor (3a).

9. The force application device according to claim 7, further comprising a roll force sensor (6a) configured to measure a roll torque exerted on the lever (1) and/or a pitch force sensor (6b) configured to measure a pitch torque exerted on the lever (1), to allow a force-piloting of the pilot stick.

10. The force application device according to anyone of claims 1 to 9, wherein the rheological brake (5a) is configured to exert a resistive torque on the mechanical joint, a value of which is limited to 70 Nm, preferably 25 Nm, as a function of an electric current provided to the control device (54).

11. The force application device according to anyone of claims 1 to 10, wherein the control device (54) is controlled according to a predetermined law to exert an electromagnetic field which is a function of a position and/or speed of the lever (1).

12. The force application device according to anyone of claims 1 to 11, wherein the force motor is a roll motor (3a), the rotation of the motor shaft being linked to the rotation of the mechanical joint (2) about the roll axis (X), the rheological brake (5a) being adapted to exert a force feedback on the roll axis (X),
the device further comprising a pitch motor (3b) comprising a pitch motor shaft extending along a fourth axis (B), the rotation of the pitch motor shaft being linked to the rotation of the mechanical joint about the pitch axis (Y),
the device comprising an additional rheological brake (5b) adapted to exert a force feedback on the pitch axis (Y).

13. An active aircraft pilot stick comprising:
- a force application device according to anyone of claims 1 to 12,
- a lever (1) able to rotate about the roll axis (X) and the pitch axis (Y), the lever being arranged on the mechanical joint (2).

14. A method for mechanical back-up monitoring of a device for applying a force on an aircraft pilot stick, the method being implemented using a force application device according to anyone of claims 1 to 12 and comprising the steps of:
- detecting (100) a fault on a processing chain of a force motor (3a) of the force application device,
- generating an electromagnetic field control (200) below a slip torque of a rheological material contained in a rheological brake (5a) of the force application device, said control being transmitted to a device for controlling the force application device to block the lever,
- optionally, activating (300) a force pilot mode of the pilot stick.

15. A method for damping control of a device for applying a force on an aircraft pilot stick, the method being implemented using a force application device according to anyone of claims 1 to 12, the method comprising the steps of:
- detecting (400) a position and/or speed of a lever (1) in rotation about a roll axis (X) or a pitch axis (Y), the lever (1) being arranged on a mechanical joint (2) of the force application device,
- generating an electromagnetic field control (500) according to a predetermined law as a function of the detected position and/or speed, said control being transmitted to a device for controlling the force application device, so that a rheological brake of the force application device exerts a resistive torque opposing a rotational movement of the lever as a complement to a force motor (3a) of the force application device.
